# EUROPÄISCHE PATENTSCHRIFT

(11) **EP 3 331 735 B1**
(45) Veröffentlichungstag und Bekanntmachung des Hinweises auf die Patenterteilung: **19.02.2020**
(21) Anmeldenummer: 16741962.1
(22) Anmeldetag: 26.07.2016
(51) Int. Cl.: B60T 8/34

(54) **KRAFTFAHRZEUG MIT EINEM REKUPERATIVEN BREMSBETRIEB**
MOTOR VEHICLE HAVING A RECUPERATIVE BRAKING MODE
VÉHICULE AUTOMOBILE AYANT UN SYSTÈME DE FREINAGE À RÉCUPÉRATION

(30) Priorität: 07.08.2015 DE 102015215126
(43) Veröffentlichungstag der Anmeldung: 13.06.2018
(73) Patentinhaber: Volkswagen Aktiengesellschaft, 38440 Wolfsburg (DE)
(72) Erfinder: SCHINELLER, Leo, 38553 Wasbüttel (DE); RISCHBIETER, Frank, 38165 Lehre (DE)
(86) Internationale Anmeldenummer: PCT/EP2016/067762
(87) Internationale Veröffentlichungsnummer: WO 2017/025317

(56) Entgegenhaltungen:
- WO-A1-2011/160963
- DE-A1- 3 613 470
- DE-A1- 4 002 635
- DE-A1- 4 031 319
- DE-A1- 4 205 041
- DE-A1- 19 604 134

## Beschreibung

Die Erfindung betrifft eine Hydraulikbremse für ein Kraftfahrzeug. Die Hydraulikbremse weist pro Rad ein Einlassventil und ein schaltbar ausgestaltetes Auslassventil auf, wobei stromabwärts des Einlassventils eine Bremsdruckleitung bereitgestellt ist, über welche das Einlassventil und das Auslassventil miteinander gekoppelt sind und welche zu einem Kolben eines Bremsbelags einer Reibbremse des Rades führt. Stromabwärts des Auslassventils ist ein Hydraulikspeicher zum Speichern von Hydraulikflüssigkeit bereitgestellt. Zu der Erfindung gehört auch ein Kraftfahrzeug mit der erfindungsgemäßen Hydraulikbremse.

Um die beschriebene Hydraulikbremse in ein rekuperatives System zu integrieren, muss bei betätigtem Bremspedal das verdrängte Volumen der Hydraulikflüssigkeit über das Auslassventil in den Hydraulikspeicher geführt werden, damit am Kolben des Bremsbelags kein Bremsdruck aufgebaut wird. Allerdings verursacht der Hydraulikspeicher einen Restdruck in der Bremsdruckleitung, der über das geöffnete Auslassventil auf den Kolben des Bremsbelag der Bremsscheibe des Rades drückt. Dies verschlechtert die Effizienz bezüglich der Energierückgewinnung im rekuperativen Bremsbetrieb.

Ein rekuperatives Bremssystem, für welches die erfindungsgemäße Hydraulikbremse geeignet ist, ist beispielsweise aus der DE 10 2012 023 345 A1 bekannt. Danach wird für einen regenerativen Bremsvorgang nach Betätigen eines Bremspedals und Aktivieren eines Generators für jede Bremse ein Druckabbauventil geöffnet, sodass ein Hydraulikfluid von den Radbremsen abfließt und hierdurch der Bremsdruck in den Radbremsen sinkt. Somit wird das hydraulische Bremsmoment nicht in dem Maß aufgebaut, wie das Gesamtbremsmoment, das zusätzlich das Generatormoment umfasst.

Aus der DE 10 2012 203 779 A1 ist bekannt, dass bei einem rein regenerativen oder rekuperativen Bremsen ein Bremsdruckaufbau in einem Bremskreis eines Bremssystems auf einen Ansprechdruck eines Speichervolumens des Bremskreises begrenzt wird. Dies geschieht durch Steuern eines Radauslassventils des Bremskreises, sodass Bremsflüssigkeit über das Radauslassventil aus dem Hauptbremszylinder und dem ersten Bremskreis in das Speichervolumen des Bremskreises verschoben wird.

In dem Dokument DE 42 05 041 A1 ist eine Hydraulikbremse beschrieben, bei welcher die einzelnen Reibbremsen von der Bremsdruckleitung durch ein Regelventil getrennt sind.

In dem Dokument WO 2011/160963 A1 ist eine Hydraulikbremse beschrieben, bei welcher die einzelnen Reibbremsen über eine Drossel oder Blende mit der Bremsdruckleitung hydraulisch verbunden sind.

In dem Dokument DE 40 31 319 A1 ist ein Doppelventil beschrieben, wobei für jede Flussrichtung eines der Ventile wirksam ist und die Ventile unterschiedliche Öffnungsdrücke aufweisen.

In dem Dokument DE 196 04 134 A1 ist ein rekuperativer Bremsbetrieb beschrieben, für welchen auch ein Bremskreislauf aktiv gesteuert wird.

In dem Dokument DE 40 02 635 A1 ist ein Ventil beschrieben, das in einen Bremssattel integriert ist.

In dem Dokument DE 36 13 470 A1 ist beschrieben, dass Hinterbremsen in einem Bremskreislauf über ein Doppelventil von der Bremsdruckleitung getrennt sein können, um eine zeitliche Bremsverzögerung zu erreichen.

Der Erfindung liegt die Aufgabe zugrunde, den eingangs beschriebenen Effizienzverlust aufgrund der Rückwirkung des Hydraulikspeichers auf den Kolben des Bremsbelags zu vermeiden.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist eine Hydraulikbremse für ein Kraftfahrzeug bereitgestellt. Bei der Hydraulikbremse sind für zumindest ein Rad jeweils ein Einlassventil und ein schaltbar ausgestaltetes Auslassventil bereitgestellt. Stromabwärts des Einlassventils (und stromaufwärts des Auslassventils) ist eine Bremsdruckleitung vorgesehen, die das Einlassventil hydraulisch oder fluidisch mit dem Auslassventil koppelt. In an sich bekannter Weise kann durch Schließen des Auslassventils über das Einlassventil ein Bremsdruck in der Bremsdruckleitung aufgebaut werden, der dann auf einen Kolben eines Bremsbelags einer Reibbremse des Rades wirkt und hierdurch in bekannter Weise eine Bremswirkung einer Bremsscheibe des Rades hervorruft. Bei der Hydraulikbremse ist des Weiteren stromabwärts des Auslassventils ein Niederdruckspeicher oder Hydraulikspeicher zum Speichern von Hydraulikflüssigkeit bereitgestellt.

Um beim regenerativen oder rekuperativen Bremsen einen Aufbau eines Bremsdrucks in der Bremsdruckleitung zu vermeiden, ist es möglich, während der Betätigung eines Bremspedals das Auslassventil in eine Offenstellung zu schalten, sodass Bremsflüssigkeit aus der Bremsdruckleitung durch das Auslassventil in den Hydraulikspeicher entweichen kann. Dann wirkt aber in der eingangs beschriebenen Weise der Restdruck des Hydraulikspeichers durch das Auslassventil zurück in die Bremsleitung. Der Restdruck wird im Hydraulikspeicher beispielsweise durch eine Druckfeder verursacht, welche einen statischen Druck auf die im Hydraulikspeicher gespeicherte Hydraulikflüssigkeit ausübt. Um nun zu verhindern, dass dieser Restdruck auch auf den Kolben des Bremsbelages wirkt, ist erfindungsgemäß vorgesehen, dass die Bremsdruckleitung über eine Ventilanordnung mit dem Kolben des Bremsbelags gekoppelt ist. Die Ventilanordnung weist dabei zwei Ventile auf, ein nur zu dem Kolben hin zulässiges erstes Ventil und ein nur zu der Bremsdruckleitung hin durchlässiges zweites Ventil. Ein Öffnungsdruck des ersten Ventils, das in Durchlassrichtung von der Bremsdruckleitung hin zum Kolben gerichtet ist, ist größer als der durch den Hydraulikspeicher bewirkte Restdruck. Indem der Öffnungsdruck des ersten Ventils größer als dieser Restdruck ist, ist der Hydraulikspeicher nicht in der Lage, den Restdruck auf den Kolben des Bremsbelags zu übertragen, weil dieser fluidisch stromabwärts zur Ventilanordnung angeordnet ist.

Durch die Erfindung ergibt sich der Vorteil, dass während des regenerativen oder rekuperativen Bremsbetriebs das Auslassventil der Hydraulikbremse in eine Offenstellung gebracht werden kann, ohne dass hierdurch der Hydraulikspeicher mit seinem Restdruck auf den Kolben des Bremsbelags der Reibbremse rückwirkt. Somit ist es möglich, dass der Bremsbelag bezüglich der Bremsschreibe berührungsfrei bleibt und somit kein Effizienzverlust während des rekuperativen Bremsbetriebs durch ein Reiben des Bremsbelags an der Bremsscheibe verursacht wird.

Zu der Erfindung gehören auch optionale Weiterbildungen, durch deren Merkmale sich zusätzliche Vorteile ergeben.

Um den rekuperativen Bremsbetrieb durchzuführen, sieht eine Weiterbildung vor, dass in Abhängigkeit von einem Signal, das den rekuperativen Bremsbetrieb signalisiert, also beispielsweise die Aktivität einer elektrischen Maschine im Generatorbetrieb signalisiert, das Auslassventil in die Offenstellung geschaltet wird, sodass ein stromaufwärts des Einlassventils durch ein betätigtes Bremspedal verursachter Fluidstrom durch das Einlassventil an der Ventilanordnung vorbei und durch das Auslassventil in den Hydraulikspeicher abgeführt wird. Hierdurch ergibt sich der Vorteil, dass die Ventilanordnung den rekuperativen Bremsbetrieb nicht beeinflusst.

Gemäß einer Weiterbildung liegt der Öffnungsdruck des ersten Ventils in einem Bereich von 1 bar bis 3 bar. Hierdurch ergibt sich der Vorteil, dass bei einem hydraulischen Bremsbetrieb, wenn in der Bremsdruckleitung Bremsdruck zum Betreiben der Reibbremse aufgebaut wird, durch den verhältnismäßig geringen Öffnungsdruck des ersten Ventils für den Fahrer bei der hydraulischen Bremsung kein Widerstand der Ventilanordnung zu spüren ist.

Gemäß einer Weiterbildung liegt ein Öffnungsdruck des zweiten Ventils in einem Bereich kleiner als 0,8 bar. Hierdurch ergibt sich der Vorteil, dass das Rückstellen oder Rückführen des Bremsbelags in die Ruhestellung am Ende eines hydraulischen Bremsvorganges nicht durch die Ventilanordnung behindert oder verzögert wird.

Gemäß einer Weiterbildung ist die Ventilanordnung in einen Ventilblock integriert. Der Ventilblock sieht vor, dass das Einlassventil und das Auslassventil zusammen mit zumindest einem weiteren Einlassventil und zumindest einem weiteren Auslassventil für ein jeweiliges weiteres Rad in dem Ventilblock integriert sind. In diesem Ventilblock ist dann ebenfalls die Ventilanordnung integriert. Hierdurch ergibt sich der Vorteil, dass der Ventilblock als Einbauteil bereitgestellt werden kann und dieser Ventilblock beim rekuperativen Bremsbetrieb bereits rückwirkungsfrei in Bezug auf den Kolben des Bremsbelags ausgestaltet ist. Ein solcher Ventilblock kann beispielsweise Bestandteil einer elektronischen Stabilitätskontrolle (ESC - electronic stability control) sein, die mit möglichst wenig Bauteilen realisiert werden soll, nämlich nach dem sogenannten 2-Box-Prinzip auf der Grundlage eines Hauptventils und des Ventilblocks.

Gemäß einer alternativen Weiterbildung ist die Ventilanordnung als ein einzeln montierbares Zwischenstück ausgestaltet, über welches die Bremsdruckleitung und die Reibbremse mechanisch gekoppelt sind. Beispielsweise kann ein solches Zwischenstück an den beschriebenen Ventilblock angeschraubt sein, das heißt an einen Ausgang der in den Ventilblock integrierten Bremsdruckleitung. Diese Weiterbildung weist den Vorteil auf, dass die Ventilanordnung als Nachrüstteil in einen bestehenden Bremskreis integriert werden kann.

Gemäß einer alternativen Weiterbildung ist die Ventilanordnung in einen Bremssattel der Reibbremse integriert. Hierdurch ergibt sich der Vorteil, dass die Reibbremse sich selbst gegen die Rückwirkung des Hydraulikspeichers und dessen Restdruck schützt.

Gemäß einer Weiterbildung sind bei der Ventilanordnung das erste Ventil und das zweite Ventil hydraulisch parallel geschaltet, d.h. die Ventilanordnung weist einen gemeinsamen ersten Anschluss zum Verbinden sowohl des ersten Ventils als auch des zweiten Ventils mit der Bremsdruckleitung und einen gemeinsamen zweiten Anschluss zum Verbinden sowohl des ersten Ventils als auch des zweiten Ventils mit) mit der Reibbremse auf. Mit anderen Worten ist ausgehend von dem ersten Anschluss eine verzweigte Hydraulikleitung vorgesehen, die den ersten Anschluss sowohl mit dem ersten Ventil als auch mit dem zweiten Ventil fluidisch gekoppelt. Genauso ist der zweite Anschluss über eine verzweigte Hydraulikleitung sowohl mit dem ersten Ventil als auch mit dem zweiten Ventil fluidisch gekoppelt. Durch die Weiterbildung ergibt sich der Vorteil, dass die insgesamt vier Ventilöffnungen der beiden Ventile mit nur zwei Anschlüssen an einen Hydraulikkreis angeschlossen werden können.

Um eine besonders robuste und in der Herstellung preisgünstige Ausführungsform der Hydraulikbremse zu realisieren, sieht eine Weiterbildung vor, dass das erste Ventil und das zweite Ventil jeweils durch ein federgelagertes Kugelventil gebildet sind. Dann sind keine Steuerleitungen nötig, um die Ventilstellungen der Ventile zu steuern.

Gemäß einer Weiterbildung ist vorgesehen, dass nur für zwei Räder, beispielsweise die beiden Hinterräder oder die beiden Vorderräder, jeweils eine Ventilanordnung vorgesehen ist. Alternativ dazu ist vorgesehen, dass für vier Räder des Kraftfahrzeugs jeweils eine Ventilanordnung vorgesehen ist. Mit anderen Worten ist bei zumindest einer Achse des Kraftfahrzeugs (Vorderachse, Hinterachse) für deren beiden Räder jeweils eine Ventilanordnung der beschriebenen Art vorgesehen.

Wie bereits ausgeführt, gehört zu der Erfindung auch ein Kraftfahrzeug. Das erfindungsgemäße Kraftfahrzeug weist eine Ausführungsform der erfindungsgemäßen Hydraulikbremse auf. Das erfindungsgemäße Kraftfahrzeug ist somit für einen besonders effizienten rekuperativen Bremsbetrieb ertüchtigt.

Bevorzugt ist das erfindungsgemäße Kraftfahrzeug als Kraftwagen, insbesondere als Lastkraftwagen oder Personenkraftwagen, ausgestaltet.

Eine Weiterbildung des Kraftfahrzeugs ermöglicht den rekuperativen Bremsbetrieb, indem eine elektrische Maschine dazu eingerichtet ist, das Kraftfahrzeug im rekuperativen Bremsbetrieb durch Wandeln von kinetische Energie des Kraftfahrzeugs in elektrische Energie abzubremsen. Eine Recheneinrichtung ist dazu eingerichtet, in Abhängigkeit von einer Betätigung eines Bremspedals des Kraftfahrzeugs den rekuperativen Bremsbetrieb einzuleiten, wie es an sich bekannt ist, und dabei den rekuperativen Bremsbetrieb mittels eines Signals an die Hydraulikbremse zu signalisieren. Durch das Signal kann dann beispielsweise in der beschriebenen Weise das Auslassventil geöffnet werden. Die genannte Recheneinrichtung kann beispielsweise durch ein Steuergerät des Kraftfahrzeugs bereitgestellt sein. Die Recheneinrichtung kann beispielsweise einen Mikrocontroller oder einen Mikroprozessor umfassen.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs,
- Fig. 2: eine schematische Darstellung einer Ausführungsform der erfindungsgemäßen Hydraulikbremse, die in dem Kraftfahrzeug von Fig. 1 eingebaut sein kann, und
- Fig. 3: eine schematische Darstellung einer Ventilanordnung, wie sie in der Hydraulikbremse von Fig. 2 vorgesehen sein kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

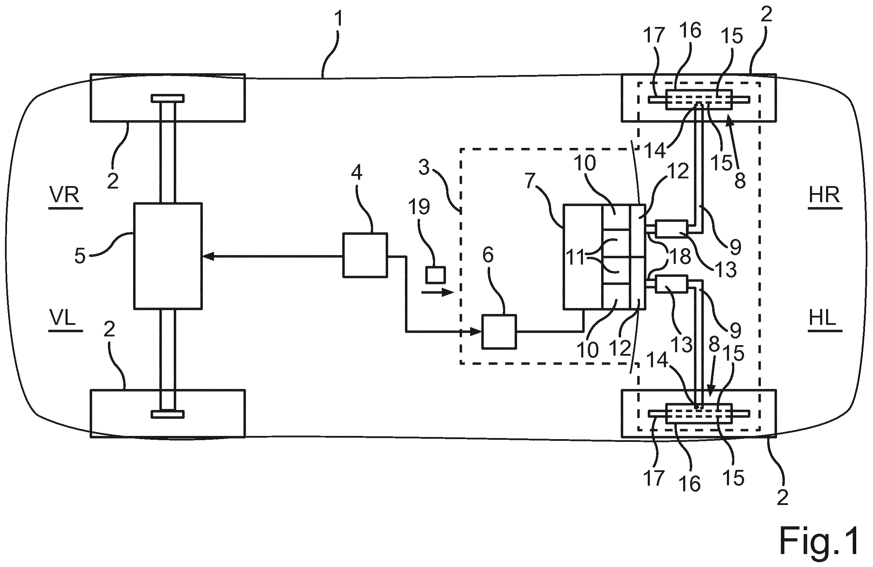

Fig. 1 zeigt aus einer Vogelperspektive ein Kraftfahrzeug 1, bei dem es sich beispielsweise um einen Kraftwagen, insbesondere einen Personenkraftwagen, handeln kann. Dargestellt sind Räder 2, ein Teil einer Hydraulikbremse 3, eine Recheneinrichtung 4 und eine elektrische Maschine 5.

Die elektrische Maschine 5 kann ein Antriebsmotor des Kraftfahrzeugs 1 sein. Es kann auch vorgesehen sein, dass das Kraftfahrzeug 1 zusätzlich oder alternativ dazu eine Verbrennungskraftmaschine aufweist, die in Fig. 1 nicht dargestellt ist. Die elektrische Maschine 5 kann beispielsweise auch als Starter-Generator ausgestaltet sein. Die elektrische Maschine 5 kann beispielsweise mit zweien der Räder 2 mechanisch gekoppelt sein, um hierdurch in einem Generatorbetrieb die gekoppelten Räder 2 abzubremsen und hierdurch einen rekuperativen Bremsbetrieb des Kraftfahrzeugs 1 zu ermöglichen.

Von der Hydraulikbremse 3 sind in Fig. 1 eine Steuereinrichtung 6, ein Ventilblock 7, Reibbremsen 8 für die Hinterräder und Hydraulikleitungen 9 dargestellt. Der Ventilblock 7 kann für jede Reibbremse 8 ein Einlassventil 10 und ein Auslassventil 11 aufweisen, die jeweils über eine Bremsdruckleitung 12 fluidisch miteinander gekoppelt sind. Die Reibbremsen 8 und das zugehörige Einlassventil 10 und Auslassventil 11 sind in Fig. 1 durch die folgenden Bezeichnungen für die Fahrzeugräder unterschieden: HR - hinten rechts, HL - hinten links. Genauso können (nicht dargestellte) Reibbremsen 3 für die Vorderräder VR - vorne rechts und VL - vorne links durch die Hydraulikbremse 3 bereitgestellt sein.

Die jeweilige Bremsdruckleitung 12 ist dabei jeweils über eine Ventilanordnung 13 und beispielsweise über eine der Hydraulikleitungen 9 mit einem Kolben 14 einer der Reibbremsen 8 fluidisch gekoppelt. Der Kolben 14 wirkt auf Bremsbeläge 15, die beispielsweise in einem Bremssattel 16 der Reibbremse angeordnet sein können. Die Bremsbeläge 15 reiben bei Beaufschlagen des Kolbens 14 mit einem Bremsdruck an einer Bremsscheibe 17 der Reibbremse 8 und bremsen hierdurch das jeweilige Rad 2.

Jede der Ventilanordnungen 13 kann in den Ventilblock 7 integriert sein. Die Ventilanordnungen 13 können alternativ dazu an einem Anschluss 18 des Ventilblocks 7 angeordnet sein und hierzu als Zwischenstück zum Verbinden des Ventilblocks 7 und der Hydraulikleitung 9 vorgesehen sein. Genauso können die Ventilanordnungen 13 jeweils auch als Zwischenstück zwischen der Hydraulikleitung 9 und dem Bremssattel 16 vorgesehen sein. Schließlich kann jede Ventilanordnung 13 jeweils auch in den Bremssattel 16 der jeweiligen Reibbremse 8 integriert sein.

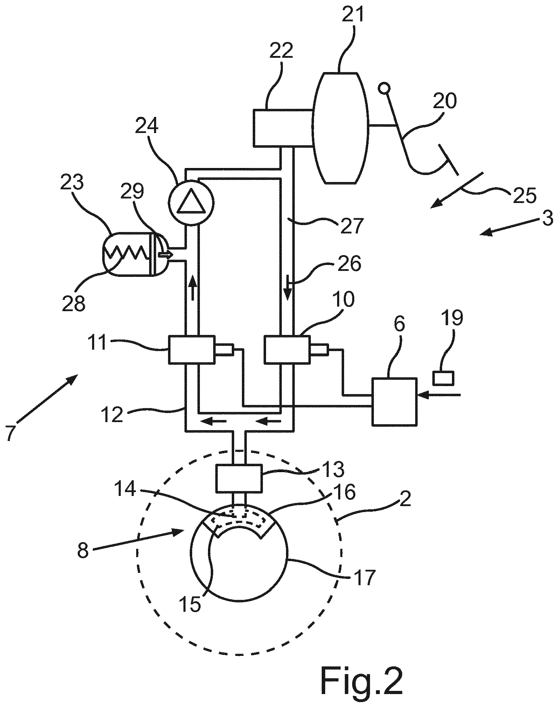

Um das Kraftfahrzeug 1 durch einen rekuperativen Bremsbetrieb abzubremsen, wird die elektrische Maschine 5 durch die Recheneinrichtung 4 in den Generatorbetrieb geschaltet. Die Recheneinrichtung 4 kann hierzu beispielsweise als ein Steuergerät ausgestaltet sein. Die Recheneinrichtung 4 signalisiert des Weiteren durch ein Signal 19 an die Steuereinrichtung 6 der Hydraulikbremse 3, dass der rekuperative Bremsbetrieb eingeleitet worden ist. Die Steuereinrichtung 6 führt dann den im Folgenden beschriebenen Steuervorgang in der Hydraulikbremse 3 durch, um den rekuperativen Bremsbetrieb möglichst effizient auszugestalten. Für die Erläuterung ist auf die folgende Fig. 2 verwiesen.

In Fig. 2 ist noch einmal am Beispiel eines einzelnen Rades 2 die Hydraulikbremse 3 genauer dargestellt. Zusätzlich zu den in Fig. 1 veranschaulichten Elementen sind noch ein Bremspedal 20, ein Bremskraftverstärker 21, ein Hauptzylinder 22, ein Hydraulikspeicher 23 und eine Pumpe 24 dargestellt. Durch eine Bremspedalbetätigung 25 des Bremspedals 2 wird in an sich bekannter Weise durch den Hauptzylinder 22 ein Fluidstrom 26 einer Bremsflüssigkeit 27 verursacht. Aufgrund oder in Abhängigkeit von dem Signal 19 schaltet die Steuereinrichtung 6 das Einlassventil 10 und das Auslassventil 11 in eine Offenstellung, wodurch der Fluidstrom 26 von dem Hauptzylinder 22 durch das Einlassventil 10 in die Bremsdruckleitung 12 gelangt. Der Fluidstrom 26 fließt an der Ventilanordnung 13 vorbei durch das Auslassventil 11 in den Hydraulikspeicher 23. Der Hydraulikspeicher 23 nimmt somit das durch die Betätigung 25 des Bremspedals 20 im Hauptzylinder 22 verdrängte Volumen der Hydraulikflüssigkeit auf. Der Hydraulikspeicher 23 kann eine Feder 28 aufweisen, durch welche ein Restdruck 29 erzeugt oder aufgebaut wird, der zurück durch das geöffnete Auslassventil 11 in der Bremsdruckleitung 12 wirkt. Indem die Ventilanordnung 13 dabei geschlossen bleibt, wird kein Bremsdruck am Kolben 14 aufbaut, d.h. der Restdruck 29 wirkt nicht auf den Kolben 14.

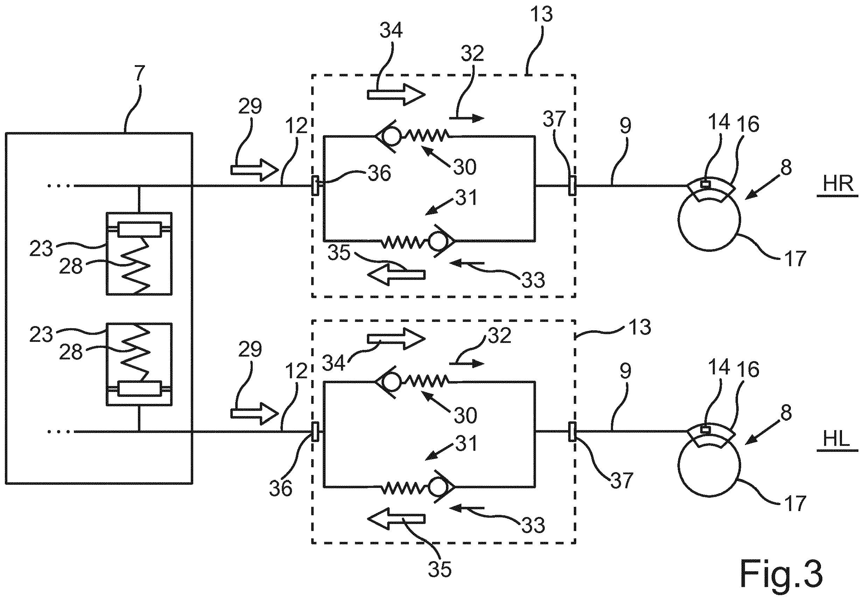

Mittels der Ventilanordnung 13 ist somit die Rückwirkung des Hydraulikspeichers 23 durch den Restdruck 29 auf den Kolben 14 der Reibbremse 8 verhindert. Grund dafür ist die im Folgenden in Zusammenhang mit Fig. 3 beschriebene Ausgestaltung der Ventilanordnung 13.

Fig. 3 zeigt hierzu noch einmal für die beiden Hinterräder HR, HL die Anordnung aus Hydraulikspeicher 23, Ventilanordnung 13 und Reibbremse 8. Der Übersichtlichkeit halber wurde das jeweilige Auslassventil 11 nicht dargestellt, da es sich während des rekuperativen Bremsbetriebs ohnehin in einer Offenstellung befindet und nicht auf den Hydraulikkreis der Hydraulikbremse 3 wirkt.

Die Ventilanordnung 13 weist ein erstes Ventil 30 und ein zweites Ventil 31 auf. Bei den Ventilen 30, 31 kann es sich beispielsweise jeweils um ein federgelagertes Kugelventil handeln. Mit anderen Worten handelt es sich bei den Ventilen 30, 31 bevorzugt um Rückschlagventile. Das erste Ventil 30 weist eine Durchlassrichtung 32 auf, die von der Bremsdruckleitung 12 hin zum Kolben 14 der Reibbremse 8 ausgerichtet ist. Das zweite Ventil 31 weist eine Durchlassrichtung 33 auf, die vom Kolben 14 hin zur Bremsdruckleitung 12 gerichtet ist. Über das erste Ventil 30 kann ein Bremsdruck von der Bremsdruckleitung 12 zum Kolben 14 übertragen werden. Über das zweite Ventil 31 kann der Bremsdruck am Kolben 14 abgebaut werden. Das erste Ventil 30 weist einen Öffnungsdruck 34 auf, der bevorzugt größer als 1 bar, insbesondere größer als 1,5 bar, ist, aber dabei insbesondere kleiner als 10 bar, insbesondere kleiner als 5 bar, ist. Allgemein ist der Öffnungsdruck 34 größer als der Restdruck 29, der durch die Feder 28 des Hydraulikspeichers 23 verursacht wird. Der Öffnungsdruck 35 des zweiten Ventils 31 ist bevorzugt kleiner als 1 bar, insbesondere kleiner als 0,5 bar.

Indem das erste Ventil 30 einen Öffnungsdruck 34 größer als der Restdruck 29 aufweist und das zweite Ventil 31 eine dem Restdruck 29 entgegengesetzte Durchlassrichtung 33 aufweist, wirkt der Restdruck 29 während des rekuperativen Bremsbetriebs trotz geöffnetem Auslassventil 11 nicht auf den Kolben 14. Somit wird durch die Ventilanordnung 13 verhindert, dass durch den Restdruck 29 die Bremsbeläge 15 an die Bremsscheibe 17 der Reibbremse 8 gedrückt werden. Somit wird ein Effizienzverlust aufgrund von Reibung vermieden.

Bei jeder Ventilanordnung 13 können die Ventile 30, 31 über einen jeweiligen gemeinsamen ersten Anschluss 36 an die Bremsdruckleitung 12 angeschlossen sein. Über einen gemeinsamen zweiten Anschluss 37 können die beiden Ventile 30, 31 mit der Reibbremse 8 verbunden sein.

Die in Fig. 1 bis Fig. 3 veranschaulichte Ventilanordnung ist lediglich als Beispiel für das Funktionsprinzip zu sehen. Es können abhängig von der hydraulischen Umsetzung mindestens zwei oder auch alle vier Reibbremsen 8 der Räder 2 ausgerüstet werden. Die Schwelldruckventile, das heißt die Ventile 30, 31, können in dem Ventilblock 7 beispielsweise in eine elektronischen Stabilitätskontrolle ESC integriert sein oder an der Bremsdruckleitung 12 in der Hydraulikleitung 9 vorgesehen sein oder auch im Bremssattel 16 angeordnet sein. Die beschriebene Ventilanordnung 13 beeinflusst nicht die Funktion des Hydraulikspeichers 23, da die Ventilanordnung 13 nicht im Strömungsverlauf der Bremsdruckleitung 12 angeordnet ist.

Jede Ventilanordnung 13 stellt ein hydraulisches Bauteil dar, welches am Bremsleitungsanschluss am oder im Ventilblock 7 zum Rad hin angebracht ist. Dieses Bauteil öffnet den Durchfluss zum Rad erst bei einem anstehenden Druck von zum Beispiel 1 bis 2 bar, um in dieser Phase kein Restbremsmoment an der Reibbremse 8 zu verursachen. Dieses Bauteil wirkt auch bei einer normalen Bremsung, verursacht aber aufgrund des gewählten Öffnungsdrucks für das erste Ventil 30 keine vom Fahrer spürbare Behinderung beim Bremsen.

Insgesamt zeigt also das Beispiel, wie durch die Erfindung eine schwelldruckabhängige Umschaltvorrichtung insbesondere im Verbund mit einem 2-Box-Bremssystem bereitgestellt werden kann.

### Bezugszeichenliste

- 1: Kraftfahrzeug
- 2: Rad
- 3: Hydraulikbremse
- 4: Recheneinrichtung
- 5: Elektrische Maschine
- 6: Steuereinrichtung
- 7: Ventilblock
- 8: Reibbremse
- 9: Hydraulikleitung
- 10: Einlassventil
- 11: Auslassventil
- 12: Bremsdruckleitung
- 13: Ventilanordnung
- 14: Kolben
- 15: Bremsbelag
- 16: Bremssattel
- 17: Bremsscheibe
- 18: Anschluss
- 19: Signal
- 20: Bremspedal
- 21: Bremskraftverstärker
- 22: Hauptzylinder
- 23: Hydraulikspeicher
- 24: Pumpe
- 25: Pedalbetätigung
- 26: Fluidstrom
- 27: Bremsflüssigkeit
- 28: Feder
- 29: Restdruck
- 30: Erstes Ventil
- 31: Zweites Ventil
- 32: Durchlassrichtung
- 33: Durchlassrichtung
- 34: Öffnungsdruck
- 35: Öffnungsdruck
- 36: Erster Anschluss
- 37: Zweiter Anschluss

## Patentansprüche

1. Hydraulikbremse (3) für ein Kraftfahrzeug (1), bei welcher für zumindest ein Rad (2) jeweils ein Einlassventil (10) und ein schaltbar ausgestaltetes Auslassventil (11) bereitgestellt ist, wobei das Einlassventil (10) stromabwärts des Einlassventils (10) über eine Bremsdruckleitung (12) hydraulisch mit dem Auslassventil (11) gekoppelt ist und wobei stromabwärts des Auslassventils (11) ein Hydraulikspeicher (23) zum Speichern von Hydraulikflüssigkeit (27) bereitgestellt ist,
**dadurch gekennzeichnet, dass**
die Bremsdruckleitung (12) über eine Ventilanordnung (13) mit einem Kolben (14) eines Bremsbelags (15) einer Reibbremse (8) des Rades (2) gekoppelt ist und die Ventilanordnung (13) ein nur zu dem Kolben (14) hin durchlässiges erstes Ventil (30) und ein nur zu der Bremsdruckleitung (12) hin durchlässiges zweites Ventil (31) aufweist und
eine Steuereinrichtung (6) dazu eingerichtet ist, in Abhängigkeit von einem Signal (19), das einen rekuperativen Bremsbetrieb signalisiert, das Auslassventil (11) in eine Offenstellung zu schalten, so dass ein stromaufwärts des Einlassventils (10) durch ein betätigtes Bremspedal (20) verursachter Fluidstrom (26) durch das Einlassventil (10) an der Ventilanordnung (13) vorbei und durch das Auslassventil (11) in den Hydraulikspeicher (23) abgeführt wird,
sodass Bremsflüssigkeit aus der Bremsdruckleitung (12) durch das Auslassventil (11) in den Hydraulikspeicher (23) entweicht, und
dann aber ein Restdruck des Hydraulikspeichers (23) durch das Auslassventil (11) zurück in die Bremsdruckleitung (12) wirkt, wobei der Restdruck im Hydraulikspeicher (23) durch eine Druckfeder verursacht ist, welche einen statischen Druck auf die im Hydraulikspeicher (23) gespeicherte Hydraulikflüssigkeit ausübt, und
ein Öffnungsdruck (34) des ersten Ventils (30) größer als der durch den statischen Druck der Druckfeder des Hydraulikspeichers (23) bewirkte Restdruck (29) ist, und hierdurch, wenn während eines rekuperativen Bremsbetriebs das Auslassventil (11) der Hydraulikbremse (3) in die Offenstellung gebracht wird, der Hydraulikspeicher (23) mit seinem Restdruck (29) nicht auf den Kolben (14) des Bremsbelags (15) der Reibbremse (8) rückwirkt, wodurch der Bremsbelag (15) bezüglich einer Bremsscheibe berührungsfrei bleibt.

2. Hydraulikbremse (3) nach Anspruch 1, wobei der Öffnungsdruck (34) des ersten Ventils (30) in einem Bereich von 1 bar bis 3 bar liegt.

3. Hydraulikbremse (3) nach einem der vorhergehenden Ansprüche, wobei ein Öffnungsdruck (35) des zweiten Ventils (31) in einem Bereich kleiner als 0,8 bar liegt.

4. Hydraulikbremse (3) nach einem der vorhergehenden Ansprüche, wobei das Einlassventil (10) und das Auslassventil (11) zusammen mit zumindest einem weiteren Einlassventil (10) und zumindest einem weiteren Auslassventil (11) für ein jeweiliges weiteres Rad (2) in einem Ventilblock (7) integriert sind und die Ventilanordnung (13) ebenfalls in dem Ventilblock (7) integriert ist.

5. Hydraulikbremse (3) nach einem der Ansprüche 1 bis 3, wobei die Ventilanordnung (13) als einzeln montierbares Zwischenstück ausgestaltet ist, über welches die Bremsdruckleitung (12) und die Reibbremse (8) mechanisch gekoppelt sind.

6. Hydraulikbremse (3) nach einem der Ansprüche 1 bis 3, wobei die Ventilanordnung (13) in einen Bremssattel (16) der Reibbremse (8) integriert ist.

7. Hydraulikbremse (3) nach einem der vorhergehenden Ansprüche, wobei die Ventilanordnung (13) einen gemeinsamen ersten Anschluss (36) zum Verbinden sowohl des ersten Ventils (30) als auch des zweiten Ventils (31) mit der Bremsdruckleitung (12) und einen gemeinsamen zweiten Anschluss (37) zum Verbinden sowohl des ersten Ventils (30) als auch des zweiten Ventils (31) mit der Reibbremse (8) aufweist.

8. Hydraulikbremse (3) nach einem der vorhergehenden Ansprüche, wobei das erste Ventil (30) und das zweite Ventil (31) jeweils durch ein federgelagertes Kugelventil gebildet ist.

9. Hydraulikbremse (3) nach einem der vorhergehenden Ansprüche, wobei für zwei Räder (2) oder für vier Räder (2) jeweils eine Ventilanordnung (13) vorgesehen ist.

10. Kraftfahrzeug (1) mit einer Hydraulikbremse (3) nach einem der vorhergehenden Ansprüche.

11. Kraftfahrzeug (1) nach Anspruch 10, wobei eine elektrische Maschine (5) dazu eingerichtet ist, das Kraftfahrzeug (1) in einem rekuperativen Bremsbetrieb abzubremsen, und wobei eine Recheneinrichtung (4) dazu eingerichtet ist, in Abhängigkeit von einer Betätigung eines Bremspedals (20) des Kraftfahrzeugs (1) den rekuperativen Bremsbetrieb einzuleiten und den rekuperativen Bremsbetrieb mittels eines Signals (19) an die Hydraulikbremse (3) zu signalisieren.

## Claims

1. A hydraulic brake (3) for a motor vehicle (1), wherein for at least one wheel (2) an intake valve (10) and a switchably designed discharge valve (11) is provided, wherein the intake valve (10) downstream of the intake valve (10) is coupled hydraulically with the discharge valve (11) via a brake pressure line (12) and wherein downstream of the discharge valve (11) a hydraulic accumulator (23) is provided for storing hydraulic fluid (27),
**characterized in that**
the brake pressure line (12) is coupled via a valve arrangement (13) with a piston (14) of a brake lining (15) of a friction brake (8) of the wheel (2) and the valve arrangement (13) has a first valve (30) that is permeable only towards the piston (14) and a second valve (31) that is permeable only towards the brake pressure line (12) and
a control device (6) is equipped, in function of a signal (19) that signals recuperative braking operation, to switch the discharge valve (11) to an open position so that a fluid flow (26) upstream of the intake valve (10) caused by an actuated brake pedal (20) is conveyed through the intake valve (10) past the valve arrangement (13) and through the discharge valve (11) into the hydraulic accumulator (23),
so that brake fluid from the brake pressure line (12) leaks through the discharge valve (11) into the hydraulic accumulator (23) and
then however residual pressure of the hydraulic accumulator (23) works through the exhaust valve (11) back to the brake pressure line (12), wherein the residual pressure in the hydraulic accumulator (23) is caused by a pressure spring that exerts static pressure on the hydraulic fluid stored in the hydraulic accumulator (23) and
an opening pressure (34) of the first valve (30) is greater than the residual pressure (29) caused by the static pressure of the pressure spring of the hydraulic accumulator (23) and thereby, if during recuperative braking operation the discharge valve (11) of the hydraulic brake (3) is brought into the open position, the residual pressure of the hydraulic accumulator (23) does not work back on the piston (14) of the brake lining (15) of the friction brake (8), whereby the brake lining (15) remains contact free in relation to a brake disc.

2. The hydraulic brake (3) according to claim 1, wherein the opening pressure (34) of the first valve (30) is in a range between 1 bar to 3 bar.

3. The hydraulic brake (3) according to one of the preceding claims, wherein an opening pressure (35) of the second valve (31) is in a range below 0.8 bar.

4. The hydraulic brake (3) according to one of the preceding claims, wherein the intake valve (10) and the discharge valve (11) together with at least one further intake valve (10) and at least one further discharge valve (11) for a further wheel (2) are integrated into a valve block (7) and the valve arrangement (13) is also integrated into the valve block (7).

5. The hydraulic brake (3) according to one of claims 1 to 3, wherein the valve arrangement (13) is configured as a spacer that is mountable individually via which the brake pressure line (12) and the friction brake (8) are coupled mechanically.

6. The hydraulic brake (3) according to one of claims 1 to 3, wherein the valve arrangement (13) is integrated into a caliper (16) of the friction brake (8) .

7. The hydraulic brake (3) according to one of the preceding claims, wherein the valve arrangement (13) has a common first contact (36) for connecting both the first valve (30) and also the second valve (31) to the brake pressure line (12) and a common second contact (37) for connecting both the first valve (30) and also the second valve (31) to the friction brake (8) .

8. The hydraulic brake (3) according to one of the preceding claims, wherein the first valve (30) and the second valve (31) is constituted by a sprung ball valve.

9. The hydraulic brake (3) according to one of the preceding claims, wherein for two wheels (2) or for four wheels (2) a valve arrangement (13) is provided.

10. A motor vehicle (1) with a hydraulic brake (3) according to one of the preceding claims.

11. The motor vehicle (1) according to claim 10, wherein an electric machine (5) is equipped to brake the motor vehicle (1) in a recuperative braking operation, and wherein a processing unit (4) is equipped, in function of actuation of a brake pedal (20) of the motor vehicle (1), to introduce the recuperative braking operation and to signal the recuperative braking operation by means of a signal (19) to the hydraulic brake (3).

## Revendications

1. Frein hydraulique (3) pour un véhicule automobile (1), dans lequel pour au moins une roue (2) est prévue respectivement une soupape d'admission (10) et une soupape de décharge (11) configurée de manière commutable, dans lequel la soupape d'admission (10) en aval de la soupape d'admission (10) via une conduite de pression de freinage (12) est couplée hydrauliquement à la soupape de décharge (11), et dans lequel en aval de la soupape de décharge (11) est prévu un accumulateur hydraulique (23) pour stocker le fluide hydraulique (27),
**caractérisé en ce que**
la conduite de pression de freinage (12) est couplée via un ensemble de soupapes (13) à un piston (14) d'une garniture de frein (15) d'un frein à friction (8) de la roue (2) et l'ensemble de soupapes (13) comporte une première soupape (30) qui n'est perméable qu'au piston (14) et une deuxième soupape (31), qui n'est perméable qu'à la conduite de pression de freinage (12), et
un dispositif de commande (6) est configuré pour commuter la soupape de décharge (11) en position ouverte en fonction d'un signal (19) qui signale une opération de freinage récupératif, de sorte qu'un écoulement de fluide (26) provoqué en amont de la soupape d'admission (10) par une pédale de frein actionnée (20) est mené à travers la soupape d'admission (10) sur l'ensemble de soupapes (13) et évacué par la soupape de décharge (11) dans l'accumulateur hydraulique (23),
de sorte que le liquide de frein s'échappe de la conduite de pression de freinage (12) à travers la soupape de décharge (11) dans l'accumulateur hydraulique (23), et
mais après une pression résiduelle de l'accumulateur hydraulique (23) agit par la soupape de décharge (11) de retour dans la conduite de pression de freinage (12), la pression résiduelle dans l'accumulateur hydraulique (23) étant provoquée par un ressort de compression, qui exerce une pression statique sur le fluide hydraulique stocké dans l'accumulateur hydraulique (23), et
une pression d'ouverture (34) de la première soupape (30) est supérieure à la pression résiduelle (29) provoquée par la pression statique du ressort de compression de l'accumulateur hydraulique (23), et ainsi, si lors d'une opération de freinage récupératif, la soupape de décharge (11) du frein hydraulique (3) est amené en position ouverte, l'accumulateur hydraulique (23) avec sa pression résiduelle (29) n'agit pas de retour sur le piston (14) de la garniture de frein (15) du frein à friction (8), grâce à quoi la garniture de frein (15) reste sans contact par rapport à un disque de frein.

2. Frein hydraulique (3) selon la revendication 1, dans lequel la pression d'ouverture (34) de la première soupape (30) est dans une plage de 1 bar à 3 bar.

3. Frein hydraulique (3) selon l'une des revendications précédentes, dans lequel une pression d'ouverture (35) de la deuxième soupape (31) est dans une plage inférieure à 0,8 bar.

4. Frein hydraulique (3) selon l'une des revendications précédentes, dans lequel la soupape d'admission (10) et la soupape de décharge (11) avec au moins une autre soupape d'admission (10) et au moins une autre soupape de décharge (11) pour une autre roue respective (2) sont intégrées dans un bloc de soupapes (7) et l'ensemble de soupapes (13) est également intégré dans le bloc de soupapes (7).

5. Frein hydraulique (3) selon l'une des revendications 1 à 3, dans lequel l'ensemble de soupapes (13) est conformé comme une pièce intermédiaire pouvant être montée individuellement, par laquelle la conduite de pression de freinage (12) et le frein à friction (8) sont couplés mécaniquement.

6. Frein hydraulique (3) selon l'une des revendications 1 à 3, dans lequel l'ensemble de soupapes (13) est intégré dans un étrier de frein (16) du frein à friction (8).

7. Frein hydraulique (3) selon l'une des revendications précédentes, dans lequel l'ensemble de soupapes (13) comporte une première connexion commune (36) pour connecter à la fois la première soupape (30) et la deuxième soupape (31) à la conduite de pression de freinage (12) et une seconde connexion commune (37) pour connecter à la fois la première soupape (30) et la deuxième soupape (31) au frein à friction (8).

8. Frein hydraulique (3) selon l'une des revendications précédentes, dans lequel la première soupape (30) et la deuxième soupape (31) sont chacune formées par une soupape à bille à ressort.

9. Frein hydraulique (3) selon l'une des revendications précédentes, dans lequel pour chacune des deux roues (2) ou quatre roues (2) est prévu un ensemble de soupapes (13).

10. Véhicule automobile (1) à frein hydraulique (3) selon l'une des revendications précédentes.

11. Véhicule automobile (1) selon la revendication 10, dans lequel une machine électrique (5) est adaptée pour ralentir le véhicule automobile (1) dans une opération de freinage récupératif, et dans lequel un dispositif informatique (4) est adapté, en fonction d'un actionnement d'une pédale de frein (20) du véhicule automobile (1), pour déclencher l'opération de freinage récupératif et pour signaler l'opération de freinage récupératif au moyen d'un signal (19) au frein hydraulique (3).
